# EUROPEAN PATENT APPLICATION

(11) **EP 4 393 866 A1**
(43) Date of publication of application: **03.07.2024**
(21) Application number: 23219180.9
(22) Date of filing: 21.12.2023
(51) Int. Cl.: B66F 9/065, B60K 6/46, B60L 15/00, B66F 9/075, B66F 9/22, B66F 9/24, E02F 9/12, E02F 9/20

(54) **ENERGY MANAGEMENT SYSTEM IN AN ELECTRIC TELEHANDLER**

(30) Priority: 27.12.2022 IT 202200026844
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

A self-propelled operating machine (1), such as, for example, a telehandler, comprising: at least one motor (21, 22); processing means for controlling at least the operation of the motor comprising a consumption management module (31) configured for managing operation of the motor on the basis of a plurality of general consumption levels, which correspond to various energy consumptions allowed by the motor. Each consumption level comprising in turn one or more operational consumption levels, which correspond to respective energy consumptions allowed for the motor as a function of various operating conditions of the machine.

## Description

This invention relates to an electric telehandler equipped with a particular energy management system.

There are prior art electric or hybrid telehandlers which use one or more electric motors for the translation and for actuating the operating devices, in particular the operating boom.

The idea of setting an "energy saving" condition is also known in vehicles which use electric motors, in which restrictions are placed on the energy consumed by the motors.

However, the prior art energy saving solutions are not very flexible and are not optimised for the technical sector of telehandlers and they also require the full discretion of the individual operator to decide on the restrictions to be imposed.

The technical purpose which forms the basis of this invention is to provide a telehandler with switchable power supply which is improved in terms of ease of use, safety and productivity.

The technical purpose specified is achieved by the operating machine, for example a telehandler, made according to the accompanying claims. Further features and advantages of the present invention are more apparent in the non-limiting description of a preferred embodiment of the proposed operating machine, as illustrated in the accompanying drawings, in which:

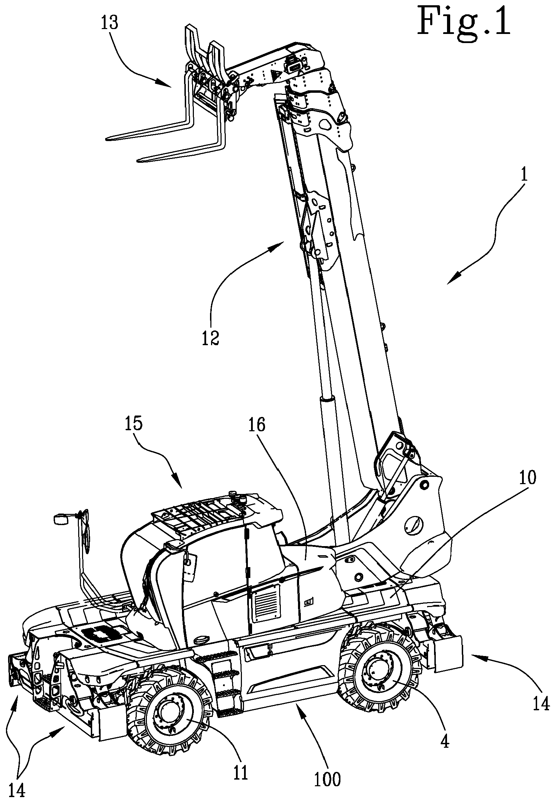

- Figure 1 is a side view of a telehandler according to the invention; and
- Figure 2 is a diagram showing the operation of a consumption management system according to the invention.

With reference to the first drawing, the numeral 1 denotes in its entirety an electrically powered telehandler according to the invention. Although reference will be made below to the preferred case of a telehandler powered exclusively electrically, the use of a hybrid power supply is not excluded. The proposed telehandler 1 is equipped with a carriage 10 movable on wheels 11, of a telescopic operating boom 12, designed to lift and move loads and may be equipped with stabilisers 14 comprising a plurality of stabilising booms.

In place of the wheels 11 there could be tracks or other apparatus or locomotion means.

Thanks to specifically provided hydraulic cylinders, the operating boom 12 can be extended and inclined about a hinge with a horizontal axis and is equipped, at its distal end, with a quick coupling device which allows the removable coupling of accessories 13 which pick up and carry the load, such as forks, cages, winches, etc.

The telehandler 1 may be fixed, in which case the boom 12 and the cab 15 are mounted directly on the carriage 10, or rotary (such as that shown in the drawings), in which case a rotatable platform or "tower" 16, mounted on the carriage 10, has an boom 12 and a cab 15.

In still more detail, the boom 12 may oscillate vertically, under the actuation of a hydraulic cylinder or similar actuator, between a lower position, substantially horizontal, and an upper position wherein the boom 12 is close to the vertical. Moreover, the boom 12 comprises a plurality of segments inserted one inside the other, coaxial with each other and designed to translate along the axial direction; the elongation and retraction of the boom 12 are also produced by one or more hydraulic cylinders, or other actuators. The rotation of the tower 16 is also produced by an actuator preferably hydraulic, such as, for example, a motor-driven rack or "turntable", and it is preferably a hydraulic actuator which allows the tilting or the other movements of the accessory 122.

The above-mentioned stabilisers 14 can include four mobile stabilising booms, two fronts at the front of the carriage 10 and two at the rear of the carriage 10 which may be of the telescopic type and shaped in the form of scissors, as shown in the accompanying drawings. More in detail, in the case of scissor stabilisers 14, each stabilising boom includes a hydraulic cylinder for the extension, that is, for moving the extension beams relative to the segments in which they are inserted telescopically and a cylinder for rotation of the booms, which allows the stabilisers 14 to be moved from the raised position to the position in contact with the ground.

The telehandler 1 also mounts an electro-hydraulic distributor to which are individually connected the above-mentioned actuators according to known methods. However, embodiments in which one or more of the above-mentioned actuators are of the electric type instead of hydraulic are not excluded.

The telehandler 1 includes electronic processing means which comprise a processing unit and are therefore a generalisation.

The processing unit may be associated with, included in or consist of the control unit which is normally on board this type of machine.

The processing unit is designed for transmitting control signals to the distributor which consequently controls the actuators, in such a way that they actuate the boom 12, the stabilisers 14, the tower 16 (if present), the wheels (more generally, the locomotion means) and the accessory 13 according to the commands issued by the operator who sits in the cab.

In practice, the telehandler 1 includes in the relative cab 15, available to the operator, commands such as joystick, pedals, pushbuttons, etc...; by acting on the commands, the processing unit generates control signals, which are received by the distributor, which then adjusts consequently the operation of each actuator of the boom 12, of the stabilisers 14, of the accessory 13 and of the platform 16.

In addition, the invention may, if necessary, comprise the use of a remote control which comprises commands which correspond functionally to those present in the cab 15 and it is designed to transmit control signals to a receiver which is connected to the processing unit.

In more general terms, the invention includes a plurality of operating apparatuses 11, 12, 13, 14, 16, each which can be operated by one or more actuator devices; the operating apparatuses may be one or more of the following: operating boom 12, accessory 13, stabilisers 14, wheels 11 and tower 16.

The telehandler 1 according to the invention may comprise at least one electric motor for powering the user devices of the machine 1. Preferably, there is a propulsion or "traction" motor 21, for example positioned at one of the axles and an electric motor 22 for driving the hydraulic pump, for example situated inside the carriage 10, which powers, using a distributor, the cylinders for moving the boom 12, those of the stabilisers 14, that or those of the accessory 13 and the motor-driven rack of the tower 16.

For this reason, in this case, one of the electric motors 21 drives a locomotion apparatus consisting of the wheels 11 and, possibly, the transmission system, and the other electric motor 22 drives the pump, by which the other operating apparatuses are activated. According to a possible variant embodiment, there is a single electric motor which powers a hydraulic system which drives both the transmission and, therefore, the traction of the machine 1, and the above-mentioned hydraulic pump.

The electric motors 21, 22 are controlled by the processing unit.

Further, the telehandler 1 is equipped with a plurality of housing seats, for example in the form of containment compartments 100, designed for housing electric batteries or other energy sources, which electrically power the propulsion motor 21 and that of the pump.

Preferably, the above-mentioned carriage 16 can define two lateral compartments 100, made in its opposite lateral portions, right and left, accessible on opposite sides, each of which is designed to house the above-mentioned power supply means.

According to an important aspect of the invention, the processing unit comprises a consumption management module 31 configured to manage the operation of the motor or the motors 21, 22 on the basis of a plurality of general consumption levels, corresponding to different energy consumptions allowed for the motor. Moreover, each consumption level in turn comprises one or more operational consumption levels, corresponding to respective permitted energy consumptions for the motors 21, 22 as a function of various operating conditions of the telehandler.

In practice, according to the invention, the energy consumption of the motors 21, 22 is modulated on the basis of a plurality of general levels, which are preferably set by the operator, for example by means of the commands located in the cab 15 or the remote control, if present.

In one particular case, there are three general consumption levels, of which a saving level, corresponding to permitted energy consumptions for the motors 21, 22 below a first threshold, a normal level, corresponding to permitted energy consumptions for the motors between the first threshold and a second threshold greater than the first threshold and a performance level, corresponding to permitted energy consumptions for motors greater than the second threshold.

By means of the commands connected to the processing unit, the operator selects the general consumption level on the basis of the performance levels considered necessary to perform the operation and the processing unit acts on the electric motors 21, 22 in such a way as to guarantee the requested performance level. Clearly, the lowest performance level also corresponds to the maximum energy saving.

Advantageously, the invention also comprises the possibility of setting operational consumption sub-levels within the above-mentioned general levels.

These operating consumption levels are a function of the operating conditions of the machine 1.

The possible operating conditions may include one or more of the following:
- position of the load transported on the accessory 13;
- weight of the load;
- operating condition on a flat or inclined surface;
- upward or downward operating condition;
- operating condition from stationary or moving;
- condition of machine 1 stationary and stabilised or resting on the wheels 11;
- type of accessory 13 mounted on the boom 12;
- oil flow rate required to perform an operation by means of the operating boom 12;
- low or high speed translation with or without load;
- road circulation condition;
- static operating condition;
- dynamic operating fluid condition;
- status of energy source.

More in detail, the status of the energy source (or sources) may be the residual charge level, in the case of battery (or similar devices) or the fuel level, such as in the case of a fuel cell or other energy sources of a chemical type.

In order to determine the operating conditions of the telehandler, there can be detection means, which may be sensors, among which there may be one or more of the following:
- pressure switch associated with lifting cylinder of the boom 12, boom 12 elongation sensor and inclinometer for determining the angular position of the boom 12 in order to check the position and weight of the load;
- inclinometer located on the carriage 16 for determining the operating condition on a flat or inclined surface;
- gear change position and/or speed sensors to determine the operating condition from stationary or moving and the speed of travel;
- position sensors of the stabilisers 14 to check whether the machine is stabilised;
- sensor, for example of the RFID type, for detecting the type of accessory 13;
- flow meter for measuring the oil flow rate;
- sensors for measuring the above-mentioned status of the energy source, such as, for example, a sensor for measuring the charge or other electrical quantities for the case in which the source is a battery or similar devices or one or more level or pressure sensors for measuring the level of fuel or similar substances in tanks or accumulators of sources which use chemical energy.

More generally speaking, the consumption management module 31 may be configured to manage the operation of the motor or of the motors 21, 22 as a function of the current operating condition which is a function of the state of use of one or more elements of the machine, which may be one or more of the operating apparatuses 11, 12, 13, 14, 16. The states of use of the machine elements are acquired by the processing unit using the detection means.

The road circulation condition may be an operating condition of the machine wherein the locomotion means 11 are operating, the operating boom 12 is in a lowered safety position, completely retracted and is preferably without any apparatus.

The static operating condition may be an operating condition of the machine wherein the translation speed is zero and the locomotion means 11 can be deactivated; also, preferably, the stabilisers 14 are placed on the ground in such a way as to stabilise the machine, the operating boom 12 is activated and is fitted with an accessory 13.

The dynamic operating condition may be an operating condition of the machine wherein the locomotion means 11 are actuated, the stabilisers 14 are raised, the operating boom 12 mounts an accessory 13 and preferably the accessory 13 carries a load or is performing an operation without a load, as is the case if the accessory is a snowplough.

Preferably, the processing unit comprises a setting module (not illustrated) configured for automatically selecting the above-mentioned operational consumption levels as a function of the measurements performed by said measurement means.

In this case, depending the operating conditions detected, the processing unit automatically sets a predetermined sub-level of consumption, within the general level selected by the operator, in such a way that the power delivered by the motors is modulated not only on the basis of the performance requirements selected by the operator but also on the basis of the various relative energy consumptions required by the various operating conditions in which the telehandler is to operate.

The operational sub-levels or levels may be defined by maximum and minimum consumption thresholds included in the range of energy consumption permitted in the relative general consumption level. According to a particular embodiment, the general consumption levels are segmented into the same types of operational consumption levels, for example: road circulation condition, static operating condition and dynamic operating condition. In the static operating condition, the machine 1 uses the operating boom 12 for performing a working operation and, in the dynamic operating condition, the machine 1 translates whilst carrying a load.

If the types of operating consumption levels are common to the various general levels, for the same operations there may be various permitted consumptions, depending on the general levels set by the operator, in the same way that, for the same general level, there may be various consumptions depending on the various operating conditions.

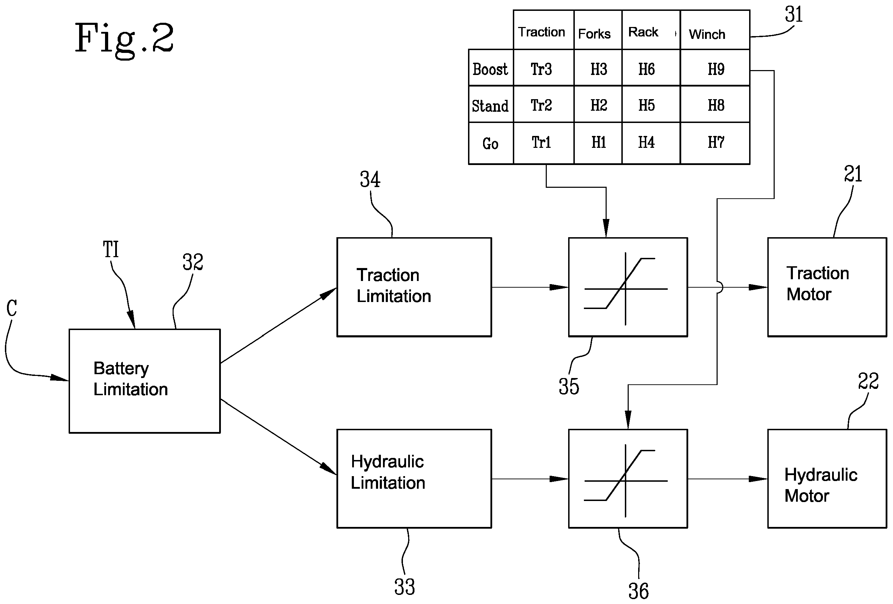

For example, the dynamic operating condition requires greater performance levels than the static operating condition, but if the telehandler 1 is in the dynamic operating condition and the operator has set the saving level, the permitted consumptions will be less than if the telehandler 1 is in the static operating condition but the operator has set the performance level. According to a particular embodiment, the operation of which is shown in Figure 2, the processing means (or the processing unit) comprise a module for limiting the battery 32 configured for adjusting the maximum power which can be delivered by the battery (or batteries) to the motor 21, 22 (or to the motors) as a function of the residual charge level, that is to say, the state of charge (SOC) of the battery and/or the temperature of the battery. For example, the charging status and the battery temperature can be detected by the relative battery management system (BMS).

Before illustrating other preferential manufacturing aspects of the invention, it should be noted that, generally, in this description, the processing unit is presented as divided into separate functional modules for the purpose of describing the functions clearly and completely.

In practice, the processing unit may consist of a single electronic device, also of the type commonly present on this type of machine, such as, for example, a control unit, suitably programmed to perform the functions described; the various modules can correspond to hardware units and/or software forming part of the programmed device.

Alternatively or in addition, the functions can be performed by a plurality of electronic devices on which the above-mentioned functional modules can be distributed.

Generally speaking, the processing unit may have one or more microprocessors or microcontrollers for execution of the instructions contained in the memory modules and the above-mentioned functional modules may also be distributed on a plurality of local or remote calculators based on the architecture of the network in which they reside.

The consumption management system according to the invention can also include:
- a hydraulics limiting module 33, connected to the battery limiting module 32, configured for determining a maximum power which can be delivered to the electric motor of the hydraulic system 22 (or maximum hydraulic power) of the machine corresponding to a level of said maximum power which can be delivered by the battery;
- a traction limiting module 34, connected to the battery limiting module 32, configured for determining a maximum power which can be delivered to the traction electric motor 21 (or maximum traction power) of the machine corresponding to a level of said maximum power which can be delivered by the battery.

Preferably, the maximum power of the battery determines the maximum hydraulic power, the maximum traction power and the maximum power of accessory user devices, such as the lights of the vehicle, the climate control devices, the display, the commands in the cabin, etc. The values of the maximum power for traction, hydraulics and/or accessory user devices may vary dynamically, depending on requests for absorption of the user devices. Basically, on the basis of the state of the charge and the temperature of the battery, the processing unit determines a maximum power which can be delivered by the battery without it being damaged and then on the basis of this maximum power value it determines the maximum power which can go to the traction motor 21, the hydraulic motor 22 and the accessory user devices.

The battery limiting module 32 can operate according to a table which corresponds maximum power values to pairs of battery residual charge and temperature values.

According to this version of the invention, the consumption management module 31 is configured to determine an operating traction power threshold and an operating hydraulic power threshold as a function of the general consumption level selected and of the operating condition detected. In the example shown, the operating condition corresponds to the type of accessory 13 mounted on the operating boom, such as, for example, forks, cage or winch. The same operation of this example is applicable to solutions which comprise other accessories and, more generally speaking, different operating conditions.

Basically, based on the general consumption level selected by the operator and based on the accessory 13 detected, for example by means of the above-mentioned RFID device, the processing unit establishes upper operating power thresholds both for the hydraulics and for the traction, that is to say, maximum power values which can be used by the traction motor 21 and by the hydraulic motor 22. More in detail, apart from the level of consumption, the type of accessory 13 determines the hydraulics operating threshold whilst the traction threshold is determined by other operating conditions, such as static or dynamic operation, road circulation or others.

Figure 2 indicates the saving level with the wording "ECO", the normal level with "STAND" and the performance level with "BOOST".

Moreover, the processing unit (or, more generally, the processing means) may include a traction modulation module 35 and a hydraulics modulation module 36 configured to determine, respectively, limit to the instantaneous power which can be delivered to the traction motor 21 and limit to the instantaneous power which can be delivered to the hydraulic motor 22 on the basis of the above-mentioned maximum traction power and maximum hydraulic power and the traction and hydraulic power operating thresholds. The actual instantaneous power delivered to the motors 21, 22 is established on the basis of the energy requirements of the motors which are a function of the operating activities of the machine 1, that is to say, the operations to be performed and the control operations of the operator in the cab. The actual instantaneous powers are limited at the top by the above-mentioned limits of instantaneous powers determined by the modulation modules 35, 36.

In practice, the consumption management module 31 may be configured to emit management signals or management parameters as a function of the above-mentioned traction and hydraulic power operating thresholds. The modules for modulating the traction and the hydraulics 35, 36, based on the maximum traction and hydraulics power available which are established by the traction and hydraulics limiting modules 33, 34 and on the basis of the management signals or parameters received establish the instantaneous powers limits delivered to the two traction and hydraulic motors 21, 22.

In other words, in functional terms, the processing unit 6 determines a maximum power which can be delivered by the battery without this being damaged on the basis of the state of charge and the temperature of the battery, and then distributes this power between the traction motor 21, the hydraulic motor 22 and the accessory user devices. This subdivision is performed in such a way that each limit relating to the individual user devices (such as, for example, traction and hydraulics) cannot individually exceed the maximum value of power deliverable by the battery and that the sum of all the instantaneous powers is less than the total limit of the battery. The instantaneous limits of the user devices are calculated dynamically on the basis of the instantaneous absorptions to maximise the power available to each user device.

## Claims

1. A self-propelled operating machine (1), such as, for example, a telehandler, comprising:
at least one motor (21, 22);
processing means for controlling at least the operation of the motor comprising a consumption management module (31) configured for managing operation of the motor (21, 22) on the basis of a plurality of general consumption levels, which correspond to various energy consumptions allowed by the motor (21, 22), each consumption level comprising in turn one or more operational consumption levels, which correspond to respective energy consumptions allowed for the motor (21, 22) as a function of various operating conditions of the machine (1).

2. The machine (1) according to the preceding claim, comprising a plurality of the following operating apparatuses: locomotion means, such as the wheels (11), operating boom (12), accessory (13) carried by said boom, stabilisers (14) and rotary tower (16).

3. The machine (1) according to the preceding claim, comprising a first electric motor (21) to which locomotion means are functionally connected, such as the wheels (11), and a second electric motor (22) to which at least another operating apparatus is functionally connected.

4. The machine (1) according to the preceding claim, comprising a hydraulic pump actuated by said second motor (22) and one or more hydraulic actuators powered by said pump and designed to actuate one or more of said operating apparatuses.

5. The machine (1) according to any preceding claim, wherein said consumption management module (21) is configured for managing the operation of the motor (21, 22) on the basis of three general consumption levels, of which a saving level, which corresponds to energy consumptions allowed for the motor lower than a first threshold, a normal level, which corresponds to energy consumptions allowed by the motor between the first threshold and a second threshold greater than the first threshold and a performance level, which corresponds to energy consumptions allowed for the motor greater than the second threshold.

6. The machine (1) according to any preceding claim, comprising control means, which can be operated by an operator, connected to said processing means and configured for selecting said general consumption levels.

7. The machine (1) according to any preceding claim, comprising measurement means designed for measuring the above-mentioned operating conditions.

8. The machine (1) according to the preceding claim, wherein the processing unit comprises a setting module configured for automatically selecting said operational consumption levels as a function of the measurements performed by said measurement means.

9. The machine (1) according to any preceding claim, wherein the processing means comprise a limiting module (32) configured for regulating the maximum power deliverable from at least one source of electricity of the machine (1) to the motor or to the motors (21, 22) as a function of the residual charge level of the energy source and/or its temperature.

10. The machine according to the preceding claim and claim 3, wherein the processing means comprise: a hydraulics limiting module (33) configured to determine a maximum power which can be delivered to said second electric motor (22), as a function of said maximum power which can be delivered from the energy source; and a traction limiting module (34), configured to determine a maximum power which can be delivered to the first electric motor (21), as a function of said maximum power which can be delivered from the source.

11. The machine according to the preceding claim, wherein the consumption management module (31) is configured to determine an operating traction power threshold and an operating hydraulic power threshold as a function of the general consumption level selected and of the operating condition of the machine (1) and wherein processing means include a traction modulation module (35) and a hydraulics modulation module (36) configured to determine, respectively, a limit of an instantaneous power deliverable to the first motor (21) and a limit of an instantaneous power deliverable to the second motor (22) on the basis of the above-mentioned maximum traction power and maximum hydraulic power and the operating traction power and hydraulics thresholds.
